# EUROPEAN PATENT SPECIFICATION

(11) **EP 3 922 618 B1**
(45) Date of publication and mention of the grant of the patent: **13.09.2023**
(21) Application number: 20425016.1
(22) Date of filing: 11.06.2020
(51) Int. Cl.: C04B 28/02, C04B 28/04, C04B 28/10

(54) **CELLULAR CEMENT COMPOSITION, METHOD FOR OBTAINING IT, ITS USE FOR REALIZING A SELF-LEVELLING SCREED, AND SELF-LEVELLING SCREED REALIZED**
ZELLIGE ZEMENTZUSAMMENSETZUNG, VERFAHREN ZUR HERSTELLUNG DAVON, DEREN VERWENDUNG ZUR HERSTELLUNG VON SELBSTNIVELLIERENDEN ESTRICH UND HERGESTELLTER SELBSTNIVELLIERENDER ESTRICH
COMPOSITION DE CIMENT CELLULAIRE, SON PROCÉDÉ D'OBTENTION, D'UTILISATION POUR RÉALISER UNE CHAPE À AUTONIVELLEMENT ET CHAPE À AUTONIVELLEMENT RÉALISÉE

(43) Date of publication of application: 15.12.2021
(73) Proprietor: Pelusi, Claudio, Campegine (RE) (IT); Desira, Mario, San Giljan Malta (MT)
(72) Inventor: Pelusi, Claudio, Campegine (RE) (IT)
(74) Representative: Dalla Rosa, Adriano

(56) References cited:
- US-A1- 2008 141 906

## Description

The present invention refers to a cellular cement composition, a method for obtaining it, and its use for realizing a self-levelling screed, and self-levelling screed realized, both for internal and for external environments, with remarkable mechanical strength and with excellent quality of acoustic insulation and thermal conductivity, preferably for the consecutive laying of materials destined to walk, as for example tiles, parquet, linoleum, resin.

A cement composition for realizing a self-levelling screed is constituted by a dry, or naturally wet, cement mixture mixed with water and at least a fluidizer additive, such a dry cement mixture being composed by a binder, as for example cement, by an aggregate in the form of granulate, that generally it is constituted by sand, and possible additional granulated aggregates, as for example granules of recycled plastic.

Such a cellular cement composition may be obtained by means of the mechanical mixing of the dry, or naturally wet, cement mixture together the water and the additives directly on the site for the laying of the cellular cement composition for obtaining a self-levelling screed.

Alternatively, such a cellular cement composition may be prepared by mixing mechanically, by means of stationary or movable mixing means, the dry, or naturally wet, cement mixture with the water and the additives in a mixing station, for then transporting it by means of a movable mixing means, as for example an in-transit mixer, to the construction site wherein such a cellular cement composition must be casted for obtaining a self-levelling screed.

The fluidizer additive allows to transform the compactness of this cement composition from semi-fluid to fluid, that is its compactness after the mixing is near to the one of the water, conferring in this way the self-levelling nature of the cement composition at the state before to be cured, therefore obtaining a self-levelling screed.

There are known on the market self-levelling screed made with cured cement compositions comprising stone aggregate with grains' size comprised between 0,063 mm and 2,00 mm, as for example dry sands, by binder materials for buildings based in cement or based on chalk and possible additive materials of the traditional type. For using these type of self-levelling screed, the operators must respect a set of very strict rules with regard to the preparation of the cast of cement material, both on the base of international regulations, but also according to the non-European countries, wherein such a cement composition must be used, and on the base of construction, that is on the base the mechanical characteristics of the final cement composition that we want to obtain. The lightweight self-levelling screeds have a volumetric mass density comprised between 300 and 2000 Kg/m³, appreciably lower than the one of the ordinary screeds, thanks to the presence of empty internal areas that confer, as well as lightness, excellent thermal insulating and acoustic absorption properties.

Today there are also known, in particular in the northern coast areas of the Mediterranean sea, several surface layers made of natural aggregates composed at least by sandstone, that is stone granules with a size-range comprised between 0,063 mm and 2,00 mm, as for example sand, and at least a matrix, that is granules with a size smaller than 0,063 mm, as for example clay or micaceous clay materials, originated by the deposit and the accumulation of the thinnest suspended sediments. Such a surface layers of aggregates are considered, both by the various international regulations and for the constructive characteristics, not able to be used, or even a waste to be disposed, as for example in the Nation of Malta, since such aggregates contain high percentage of clay, and flint.

A self -levelling screed made with a cured cement composition comprising thin stone aggregate containing high percentage of clay, normally, is not adequate to receive a flooring, because of the clay, for its natural characteristic, would tend to lift on the surface, making the same surface very friable, consequence of the fact that the compressive strength of the clay is very low. Indeed, as known from several studies, for soft clay soils the compressive deformation may reach values of 40%, whereas for heavy and compact soils there are compressive deformation of about 5%.

Furthermore, a high quantity of clay in the cement composition mixed with water, would make the same cement composition not able to be pumped at high levels up to 150 m, as it would be a high-rise building, by means of pumping means for concrete, of the per se known type.

Furthermore, such a clay would tend to incorporate the binder, creating so spherical accumulations that obstruct the pumping pipes for the cement composition.

The presence of flint in a self-levelling cement composition must be considered damaging because it creates phenomena of alkali-silica reaction with the consequent pop-out of the concrete, which means that it is possible the formation of viscous gel of silicate able to expand and to create detachments of the superficial part of the concrete and possible expansive phenomena with high deterioration of the internal structures.

Such types of aggregates at the natural state may be used only as simple filler at the dry state.

For being able to find unpolluted stone aggregates by flint or high percentage of clay, for being then used for the preparation of cement composition, it is compulsory to remove such superficial layers of aggregates containing flint and high percentage of clay.

Unfortunately, these last layers have generally a thickness of few tens of meters, and consequently the excavation and disposal work causes significant quantity of time and money.

A further solution is to grind the aggregate by means of suitable grinding mills of the per se known type, depending on the desired particle size, and then to wash such a grinded aggregate by means of suitable washing machines using water jet at high pressure and a sieve for granules of materials having size smaller than 0,063 mm, thereby eliminating the clay and other materials with smaller size, as for example flint.

Such a process is expensive and involves long working times, and need of an area where the relative machinery must be placed.

The prior document US2008141906A1 discloses a cellular cementitious composition including:
a) a cementitious constituted by a mixture of Portland Cement in a percentage in weight with respect to the total weight of the cementitious from 25 to 40%, and anhydrite in a percentage in weight with respect to the total weight of the cementitious from 60 to 75% ;
b) Water;
c) Sand ;
d) Fiber;
e) a foaming additive ;
f) a water reducing additive.

The object of the present invention is to realize a cellular cement composition applicable in the building field with the function of self-levelling screed, by using at least an aggregate of the above described type, that is that it contains clay and flint, so normally discarded for realizing cement compositions, if they have not washed in advance, so that it eliminates all the above described problems, and it is also different with respect to the cellular cementitious composition disclosed by the prior art.

So, it is not necessary to extract sand without pollution, reducing so the cost and the times.

Furthermore, in addition to the ones that will be described in the text, the present invention has some significant advantages, that is the self-levelling screed obtained by means of the present cellular cement composition has a good sound insulation against walking, a good thermal insulation, and anti-seismic characteristics.

Finally, it eliminates the pollution caused by the disposal of the clay granules at the dry state, that create clouds of powder that are easily transportable by the wind, and so damaging for the citizens, and it is preserved the health of the operators that normally lay the screed in a traditional way, since the present cement composition acts as self-levelling screed, by avoiding that the operators must kneel for its laying, thereby preventing physical problems, that normally are caused by the posture and the damp created by the mixture of the laid screed.

The present invention concerns also a method for obtaining such a cellular cement composition, the use of this latter for realizing a self-levelling screed, and the realized self-levelling screed.

This cellular cement composition, the method for obtaining it, its use for realizing the self-levelling screed are made with the constructive characteristics substantially described, with particular reference to the attached patent claims.

The invention will better understand from the following description, given by way of a not limitative example only.

In the present text it is described a cellular cement composition, applicable in the building field with the function of self-levelling screed a time it will be solidified, both for internal and for external environments, with remarkable mechanical strength and with excellent quality of acoustic insulation and thermal conductivity, preferably for the consecutive laying of tiles, parquet, linoleum, resin or equivalent materials.

It is described also a process for manufacturing such a cement composition, and the use of this latter for obtaining a self-levelling screed.

The cellular cement composition according to the invention is constituted by the following components, mixed to each other with mixing water :
- Hydraulic binder;
- Stone aggregate ;
- One or more additives, both in the solid form, as for example granules or powder, and in liquid form, and able to be used for the purposes to be achieved ;
- Polymeric inert.

The hydraulic binder is selected between Portland or Pozzolanic cement 32,5 or 42,5 and lime. Such a stone aggregate is of the natural type and is constituted by sedimentary rock quarried in territories near the sea, as for example islands or peninsula, in particular territories of the Mediterranean Sea, as for example the isle of Malta, and then just grinded with granules of the desired sizes for be able to be mixed with the other components of the cement composition, according to the present invention.

The component elements that compose said stone aggregate are mainly constituted by calcarenite, by argillite and calcite in smaller quantities, with the presence of flint, and other secondary minerals, as for example opaque materials or artificial conglomerate.

The component elements of said stone aggregate are present, with respect to the weight of the same stone aggregate, with values comprised in the following percentage in weight, for a maximum of 100% :
- Calcarenite: 70,0 - 92,0 % ;
- Argillite: 3,5 - 8,0 % ;
- Calcite: 1,8 - 2,5 % ;
- Flint: 0,5 - 9,0 % ;
- Artificial conglomerate and opaque minerals: 0,9 - 1,5 % .

Furthermore, such a stone aggregate, with respect to the total volume thereof, has a portion comprised between almost 60 - 65% in volume of granules with a sized equal or greater than 0,063 mm and a portion comprised between 35 - 40 % in volume of granules with size smaller than 0,063 mm.

As for a not limitative example only, following there are shown the results of various laboratory tests of a single sample of such a stone aggregate, reduced mechanically, by means of suitable grinding mills of the per se known type, in granules with a size not greater than 4 mm, in advance. From the laboratory tests of said single sample, the component elements of said stone aggregate are resulted present in weight with the further percentages:
- Calcarenite: 91,9 % ;
- Argillite: 4,1 % ;
- Calcite: 2,3 % ;
- Flint: 0,6 % ;
- Artificial conglomerate: 0,6% ;
- Opaque minerals: 0,5 % .

By means of the granulometric laboratory test of such a sample, made by sieving, that is by using suitable sieves arranged series, each of which retaining the portion of solid whose granules have sizes greater than the holes of the sieve, it was found that such a sample of stone aggregate has almost 60% in volume of granules with size equal or greater than 0,063 mm and almost the 40% in volume of granule with size smaller than 0,063 mm.

After, an additional laboratory test has been carried out on the portion of granules having size smaller than 0,063 mm, by means of the methylene blue test.

The methylene blue test consists to quantity the absorption capacity of the soils or aggregates by measuring the quantity of methylene blue needed for covering the entire surface of the clayey particles. The measured blue value reflects the quantity and the type of clayey materials present in the analysed soil or aggregate.

The measured value of such a test in the sample of stone aggregate used in the present invention is equal to 4 g of colorant for Kg of material, and that means that the quantity of clay contained in the same stone aggregate may potentially cause swellings, or moved on the surface after that the self-levelling screed has been laid and cured, by making the surface not resistant to compression, which therefore would crumble in short time.

Furthermore, as already indicated in the preamble, the presence of flint in the used stone aggregate would be dangerous because it causes the popout effect on the laid and cured self-levelling screed. Given by way of a not limitative example only, following there is indicated a site where such a stone aggregate may be quarried by means of quarrying means of the per se known type.

The isle of Malta consists meanly of a plurality of sedimentary rock layers, known from the upper one to the lower one with the following names :
- Upper coralline limestone formation ;
- Blue clay ;
- Globigerina limestone formation ;
- Lower coralline limestone formation.

The upper layer of coralline limestone is normally used for building constructions.

The layer of blue clay is not used for building constructions, and so is discarded or use for other purposes.

The layer of globigerina limestone formation is divided in three additional sub-layers: upper one, middle one and lower one.

The upper sub-layer of such a globigerina limestone formation layer is the one from which there is quarried stone aggregate used in the cement composition, according to the present invention.

We remember that such a stone aggregate, with the presence of argillite and flint, would not be able to be used for manufacturing screeds.

For obtaining the cellular cement composition, according to the present invention, such a stone aggregate is grinded mechanically with per se known methods up to obtain granules with maximum size of 25 mm.

For obtaining the cellular cement composition, according to the invention, there are inserted one or more of the following additives, made of powder or liquid, inside the same cellular cement composition, depending on the purpose to be achieved:
- Aerating foaming agent, constituted by at least a surfactant of the per se known type, as for example the substance used for realizing bubble bath or shaving foams, and is adapted to generate air bubbles inside the cellular cement composition at the fluid state thereof, in way such to increase the lightness of the cellular cement composition ;
- Gel forming agent, constituted by a molecular colloid substance that gels when it is put in contact with water, as for example Hydroxypropyl methylcellulose, such a gelled substance being adapted to block the ascent of the air bubbles obtained with the aerating foaming agent, in such a way that said air bubbles remain incorporated inside the cellular cement composition at the fluid state thereof, conferring lightness, and after, during the curing phase of the same cellular cement composition, such a gel forming agent being adapted to release the water contained therein very slowly, reducing significantly the possibility that cracks be formed in the self-levelling screed laid in work and died. Furthermore, such a gel forming agent is adapted to retain inside itself the particles of stone aggregate having size smaller than 0,063 mm, so at least the clay and the flint, in such a way that the first one doesn't rise upward for positioning then on the surface of the realized self-levelling screes, by avoiding its early crumbling, and that the second one wouldn't cause to phenomena of alkali-silica reaction with the consequent popout of the concrete. Said gel forming agent inserted in the present cellular cement composition is metered depending on the environmental temperature during is laying, that is, more the environmental temperature increases, more the quantity of same agent increases ;
- Water-reducing agent, said also super-fluidizer of the melamine or carboxylic type, as for example acrylic polymers (for example Primium PC 20), poly-carboxylates, naphthalene polymers such as the naphthalen-sulphonated polymers, and the ligno-sulphonates polymers and further known polymers, adapted to increase the fluidity of the cellular cement composition at the fluid state thereof in a way such to reduce the consumption of mixing water, while maintaining an high level of workability of the same cement composition. Said water-reducing agent inserted in the present cellular cement composition is metered depending on the quantity of hydraulic binder present in the same cement composition ;
- A first blowing agent, constituted by aluminium powder, adapted to allow to the cellular cement composition to expand during the first 24 hours from its casting, therefore contrasting the known plastic shrinkage, by filling the cracks made by this latter phenomena, by obtaining a self-levelling screed free of structural breaks. Passed the period of time of the first above said 24 hours, such a first blowing agent stop to act. Said first blowing agent inserted in the present cellular cement composition is metered depending on the quantity of the granulate of the stone aggregate having size smaller than 0,063 mm inserted in the same cement composition, that is, more greater is the quantity of such granules, more greater is the quantity of this first blowing agent;
- Retarding agent, adapted to maintain the level of workability of the obtained cement composition with said water-reducing agent for a useful time for a maximum of 3 hours, as for example in the case that such a cement composition is obtained far away from the site where it will be transported by means of an in-transit mixer and casted. Said retarding agent inserted in the present cellular cement composition is metered depending on the environmental temperature during is casting, that is, more the environmental temperature increases, more the quantity if the same agent increases ;
- Accelerating agent, constituted by a curing accelerating additive of the per se known type, different to the calcium formate, adapted to accelerate as much as possible the curing of the cement composition after its casting, for limiting the duration of the plastic shrinkage. Said accelerating agent inserted in the present cellular cement composition is metered depending on the environmental temperature during its casting, that is, more the environmental temperature is low, more the quantity of same agent increases;
- Anti-shrinkage agent, preferably of the liquid type, and adapted to control the hygrometric shrinkage, said also hydraulic axial shrinkage, of the casted cement composition, thereby avoiding the formation of cracks, especially when there are present sudden change of thick, as for example in presence of underfloor pipes, during the curing of the same cement composition. Said anti-shrinkage agent inserted in the present cellular cement composition is metered in an inversely proportional way depending on the quantity of hydraulic binder inserted in the same cement composition ;
- A second blowing agent, constituted by a powdered blowing additive of the per se known type, different to the first blowing agent, as for example chalk, and adapted to, passed the first 24 hours from the casting of the cement composition, to allow that, during the curing thereof, particularly for the subsequent 36-48 hours, the same cement composition expands for contrasting the mechanical shrinkage, thereby preventing the formation of cracks in the obtained self-levelling screed. Said blowing agent inserted in the present cellular cement composition is metered depending on the quantity of hydraulic binder inserted in the same cement composition, that is, more the quantity of hydraulic binder increases, more the quantity of said second blowing agent increases in a proportional way ;
- Curing accelerating agent of the cement composition, acting as antifreeze for the cement composition at the fluid state thereof and for increasing the hardness of the cement composition at the cured state thereof, that is after the casting as self-levelling screed, such an agent being constituted by powdered calcium formate, namely, salt of formic acid, and by tending to lift in the cement composition positioning on the other component elements, after the curing of this latter, being so arranged in correspondence of the upper surface of the self-levelling screed, by making the same surface very hard, with an high resistance to abrasion, therefore increasing it mechanical strength. Said agent inserted in the present cellular cement composition is metered depending on the environmental temperature during its casting, that is, more the environmental temperature is low, more the quantity of the same agent increases;
- Antifoaming agent, constituted for example by mineral oils, silicone polymers, tributyl phosphate, glycols, etc., is an additive that obstructs and reduces up to the removal of the foam not retained by the gel forming agent, that is by the cellulose, in such a way that said foam doesn't lift up to the surface when the cement composition is casted, thereby avoiding that the same surface becomes crumbly. Said antifoam agent inserted in the present cellular composition is metered depending on the aerating foaming agent inserted in the same cellular cement composition, that is, more the quantity of aerating foaming agent increases, more the quantity of antifoam agent increases;
- Moisturizing agent, constituted preferably by a liquid additive based on polymers of polyacrylic acid, free from chloride, is a fluid or powdered additive adapted to hydrate all the hydraulic binder during the mixing of the cement composition, in such a way that the same binder is not incorporate by the argillite contained in the stone aggregate, thereby avoiding the formation of accumulation of mood composed by argillite including binder, and allowing consequently to work all the hydraulic binder instead that only its part not incorporated in the argillite. Said moisturizing agent inserted in the present cellular cement composition is metered depending on the quantity of hydraulic binder inserted in in the same cement composition, that is, more the quantity of hydraulic binder increases, more the quantity of moisturizing agent increases ;
- Viscosity modifying agent, constituted by at least an additive of the per se known type, as for example synthetic oil, adapted to create a cement composition more cohesive and to reduce the phenomena of segregation and particularly the superficial bleeding, increasing the viscosity of the same cement composition, without modifying its mechanical characteristics and the quantity of air present inside it. By means of such an viscosity modifying agent the cement composition prevents the friction between this latter and the internal surface of the pumping pipes used for casting the same cement composition, usually made of rubber, so being able to be pumped for several tens of meters also upward in vertical direction, up to reach heights also about of 15-20 standard floors, therefore, without that it be a risk of clogging, that causing of the high pumping pressure, as for example an outlet pressure comprised between 50 - 70 bar, let the pumping pipes explode. Said agent inserted in the present cellular cement composition is metered depending on the quantity of hydraulic binder present in the same cement composition in an inversely proportional way, that is, more the quantity of hydraulic binder increases, more the quantity of moisturizing agent decreases.

The above said additives may be prepared according to methods known by the skilled person in this branch or they are available on the market.

The polymeric inerts are of the heterogeneous type and may be constituted by thermoplastic or thermosetting polymers, as for example PET, PE, PP, LDPE, HDPE, etc., and/or elastomeric materials, as for example rubber, etc..

Said polymeric inerts is grinded in advance within grinding means of the traditional type (grinding mills, etc.) in particles having grains comprised between 2 and 20 mm on average, with subsequent homogeneous mixing of all the grinded polymeric inerts, by means of the use of mixing machine of the traditional type.

Said polymeric inerts are preferably obtained by the processing of waste material deriving from the industrial processing or craftsmanship, or by waste produced during the daily life.

Such polymeric inerts have the purpose to damp the sound waves caused by the walking therefore, being of the heterogeneous type, they produce a good noise reduction, and increase the elasticity of the self-levelling screed, when it's cured.

Following, there are specified the quantities of the component elements constituting the cellular cement composition.

Now, the total weight of the dry, or naturally wet, mixture, hydraulic binder + stone aggregate + polymeric inerts, shall be taken in account, which is the amount of the weight of these said component elements is 100%.
- Hydraulic binder:
   inserted in a quantity comprised between 3,8 and 25% in weight with respect to the total weight of the dry, or naturally wet, mixture, hydraulic binder, stone aggregate, polymeric inerts, particularly, if cement is inserted, the quantity thereof is comprised between 3,8 and 22 % in weight, if lime is inserted, the quantity thereof is comprised between 5 and 25% in weight ;
- Stone aggregate:
   Inserted in a quantity comprised between 10 and 72% in weight, with respect to the total weight of the dry, or naturally wet, mixture, hydraulic binder, stone aggregate, polymeric inerts, and particularly in a quantity comprised almost between 325 and 1430 % in weight with respect to the weight of the hydraulic binder ;
- Polymeric inerts :
   Inserted in a quantity comprised between 0,00 and 5,00 % in weight, preferably 0,30 and 5,00 % in weight, with respect to the total weight of the dry, or naturally wet, mixture, hydraulic binder, stone aggregate, polymeric inerts.

The percentages of the additives are calculated based on the total weight of the dry, or naturally wet, mixture, hydraulic binder, stone aggregate, polymeric inerts, and are added with the own percentage over said total weight, that is over the 100% in weight of such a dry, or naturally wet, mixture.

Following, the percentages indicates refer therefore to the total weight of said dry, or naturally wet, mixture, whereas possible additional ratios with respect to different elements will be expressly specified, as for example the metering in weight of an additive with respect the weight of the hydraulic binder.

The percentages in weight of the additives with respect to the total weight of said dry, or naturally wet, mixture are the following:
a. Aerating foaming agent inserted in a quantity comprised between 0,1 and 4,0% in weight ;
b. Gel forming agent inserted in a quantity comprised between 0,03 and 0,10 % in weight, particularly in a quantity comprised between 0,03 and 0,05 % with temperatures lower than 15°C during the casting of the cellular cement composition, in a quantity comprised between 0,05 and 0,07 % with temperatures comprised between 15°C and 25°C during the casting of the cellular cement composition, in a quantity comprised between 0,07 and 0,1 % with temperatures greater than 25°C during the casting of the cellular cement composition ;
c. Water-reducing agent inserted in a quantity comprised between 0,05 and 0,4% in weight, and particularly has a concentration comprised between 0,58 and 1,6% in weight with respect to the total weight of the hydraulic binder ;
d. First blowing agent inserted in a quantity comprised between 0,02 and 0,05 % in weight;
e. Retarding agent inserted in a quantity comprised between 0,03 and 0,35 % in weight, particularly in a quantity of 0,03 % with temperatures lower than 10°C during the casting of the cellular cement composition, in a quantity comprised between 0,03 and 0,1 % with temperatures comprised between 10°C and 25°C during the casting of the cellular cement composition, in a quantity comprised between 0,1 and 0,35% with temperatures higher than 25°C during the casting of the cellular cement composition ;
f. Accelerating agent inserted in a quantity comprised between 0,02 and 0,30 % in weight, particularly in a quantity of 0,30 % with temperatures lower than 5°C during the casting of the cellular cement composition, in a quantity of 0,20% with temperatures comprised between 5°C and 10°C during the casting of the cellular cement composition, in a quantity of 0,10 % with temperatures comprised between 10°C and 25°C during the casting of the cellular cement composition, in a quantity comprised between 0,02 and 0,10% with temperatures higher than 25°C during the casting of the cellular cement composition ;
h. Anti-shrinkage agent inserted in a quantity comprised between 0,01 and 0,30 % in weight, and particularly has a concentration comprised between 0,12 and 1,2 % in weight with respect to the total weight of the hydraulic binder ;
i. Curing accelerating agent of the cement composition, for increasing the hardness and for acting as antifreeze inserted in a quantity comprised between 0,02 and 0,50 % in weight, particularly in a quantity comprised between 0,4 and 0,5 % with temperatures lower than 5°C during the casting of the cellular cement composition, in a quantity comprised between 0,20 and 0,40 % with temperatures comprised between 5°C and 15°C during the casting of the cellular cement composition, in a quantity of 0,10 % with temperatures comprised between 15°C and 25°C during the casting of the cellular cement composition, and in a quantity comprised between 0,02 and 0,10 % with temperatures higher than 25°C during the casting of the cellular cement composition ;
1. Antifoaming agent inserted in a quantity comprised between 0,02 and 0,05 % in weight, and particularly has a concentration comprised between almost 12,50 and 40,00 % in weight with respect to the total weight of the water-reducing agent;
m. Moisturizing agent inserted in a quantity comprised between 0,01 and 0,25 % in weight, and particularly has a concentration comprised between almost 0,12 and 1% in weight with respect to the total weight of the hydraulic binder ;
n. Viscosity modifying agent inserted in a quantity comprised between 0,02 and 0,50 % in weight, and particularly has a concentration comprised between almost 0,08 and 5,88% in weight with respect to the total weight of the hydraulic binder ;
o. Second blowing agent inserted in a quantity comprised between 0,01 and 0,20 % in weight, and particularly has a concentration comprised between almost 0,12 and 0,8 % in weight with respect to the total weight of the hydraulic binder.

The percentage of the added mixing water is calculated based on the total weight of the dry, or naturally wet, mixture of hydraulic binder, stone aggregate, polymeric inerts, and such a mixing water is added with the own percentage over the total weight, that is over the 100%, of such a dry, or naturally wet, mixture.

The percentage in weight of the mixing water inserted in the cement composition is comprised between 8,5 and 25% in weight, with respect to the total weight of the dry, or naturally wet, mixture hydraulic binder + stone aggregate + polymeric inerts.
therefore, the finished cellular cement composition results, in weight, from the amount of the 100% of dry, or naturally wet, mixture hydraulic binder + stone aggregate + polymeric inerts with the addition of the percentage of the above described quantities of the selected additives and the mixing water.

For example, it might have a cement composition with 100% of dry, or naturally wet, mixture + 9% of mixing water + 0,2 % of water-reducing agent, for a total of 109,2 % in weight, that is in this case, always as example, if the 100% = 100Kg, the cellular cement composition would weigh 109,2 Kg.

The volumetric mass density of the dry, or naturally wet, mixture of hydraulic binder + stone aggregate + polymeric inerts is comprised between 1750 and 1950 Kg/m³.

The volumetric mass density of the cellular cement composition is comprised between 2150 and 2200 Kg/m³.

Now, there are described two example of mixture of hydraulic binder + stone aggregate + possible polymeric inerts + additives variably combined to each other, and to be mixed after with the mixing water.

A first example of said mixture, according to the invention, adapted to be mixed with mixing water for being then used for obtaining a first self-levelling screed having only a purpose of thermal and acoustic insulation, has a quantity of stone aggregate comprised between 600 and 1000 Kg for cubic metre of said mixture, preferably between 700 and 800 Kg/m³, a quantity of hydraulic binder comprised between 70 and 100 Kg for cubic metre of said mixture, whereas the polymeric inerts and the additives being in the quantities previously indicated in weight, furthermore, the addition of the aerating foaming agent completing the filling of the available volume of said first mixture.
a second example of said mixture, according to the invention, adapted to be mixed with mixing water for being then used for obtaining a second self-levelling screed having a purpose of thermal and acoustic insulation and adapted for the consecutive laying of materials destined to walk, has a quantity of stone aggregate comprised between 1300 and 1450 Kg for cubic metre of said mixture, a quantity of hydraulic binder comprised between 320 and 400 Kg for cubic metre of said mixture, whereas the polymeric inerts and the additives being added in quantities previously indicated in weight, furthermore, the addition of the aerating foaming agent completing the filling of the available volume of said second mixture.

Now, it be described a method for obtaining a cement composition at the fluid state thereof using the above described component elements.

It proceeds by quarrying mechanically said stone aggregate, that is by means of the use of digging means or equivalent, from the soil previously located, in the desired quantity.

As said above, such a stone aggregate may be found particularly in sea coastal areas and constitutes the upper first tens of meters, as for example 25 m, of the natural soil has not worked previously yet. such a quarried stone aggregate, as said above, has a percentage of 40% in volume of granules having sizes smaller than 0,063 mm and a 60% in volume of clasts and granules having sizes greater than 0,063 mm.

The stone aggregate is inserted and worked inside suitable milling means, as for example mechanical grinding mills, that are sized and calibrated for obtaining, from the part of clasts and granules having sizes greater than 0,063 mm, granules having sizes comprised between 0,063 mm and 25,00 mm.

The obtained granules of stone aggregate having size comprised between 0,063 mm and 25,00 mm together the granules having size smaller than 0,063 mm are inserted inside a rotating mixing means for cement compositions, as for example a concrete mixer or an in-transit mixer, in the quantities indicated above.

Such a mixing means rotates at the maximum speed thereof, as for example at 15 rpm.
with the rotating mixing means in the operative state thereof, it is inserted then the mixing water, in the quantities said above, preferably around 18% in weight with respect to the total weight of the dry, or naturally wet, mixture of stone aggregate, hydraulic binder and polymeric inerts, thereby obtaining a fluid cement composition.

It proceeds after by reducing at minimum the turns of the mixing means, as for example at 1-2 rpm, and by taking a sample of mixture of stone aggregate + mixing water and by submitting it to a concrete slump test, by means of the so-called slump cone, for measuring the consistence of the cement composition obtained at this point.

The slump cone is manufactured with a metal sheet with a thickness of 3-4 mm and shaped as a hollow conical frustum, having a lower base of 100 mm, an upper base of 78 mm and an height of 58 mm.

Leant such a cone on a horizontal flat surface, it is filled quickly from the top with the cement composition at the fluid state thereof by pressing this latter and within 10" such a cone is then raised vertically and linearly.

Immediately, the fluid cement composition decreases its height and consequently it increases its base diameter, by assuming the shape of a pizza, and if the base diameter obtained by the sinking is within 220 mm and 250 mm, said fluid cement composition has a correct compactness, otherwise, if the diameter is smaller, it is necessary to add further mixing water.

The turns of the rotating mixing means are increased again at the maximum speed thereof and the needed additives are added for achieving the pre-determined purposes, depending on the characteristics of the same additives, displayed above in this description.

Eventually there are then inserted the polymeric inerts, always for achieving the pre-determined purposes which are able to be obtained with such materials, that are described above.

A time that the additives are dissolved and the cellular cement composition is amalgamated, after a normal technical time, which is known to the skilled person in the field, as for example for 15 minutes, the turns of the rotating mixing means are decreased to the minimum speed thereof, in a way to prevent the formation of argillite accumulations, that make the same cellular cement composition unusable.

If the cellular cement composition has been manufactured in a mixing station which is far away from the site where it will be casted, it will be transported at the fluid state thereof by means of a mixing means, as for example an in-transit mixer.

On the construction site where the cellular cement composition must be casted, a further concrete slump test is carried out, for verifying that its values are within the workable ones of the starting cellular cement composition, that is, the diameter of the fluid cement composition after the shrinking is comprised within 220 mm - 250 mm.

In the case that such values are not comprised, additional mixing water will be added, by remaining always in the above described percentages.

By means of pumping means of the per se known type, the cellular cement composition is casted, where this laid down self-levelling and will cured over time, forming the self-levelling screed. Such a cured screed using the above fluid cement composition obtained, casted and cured is now ready for its not structural function, that is of thermal and acoustic insulation and/or to receive a paving.

Such a cured self-levelling screed obtained by means of the use of the cellular cement composition has a volumetric mass density comprised between 600 and 2050 Kg/m³, preferably the above said first example of self-levelling screed obtained by means of the first above said mixture of hydraulic binder + stone aggregate + polymeric inerts + additives has a volumetric mass density comprised between 600 and 700 Kg/m³, whereas the second example of self-levelling screed obtained by means of the second above said mixture of hydraulic binder + stone aggregate + polymeric inerts + additives has a volumetric mass density comprised between 1800 and 2050 Kg/m³.

Such a first example of cured self-levelling screed has a minimum thickness of 40 mm.

Such a second example of cured self-levelling screed has a minimum thickness of 30 mm.

Such a first example of self-levelling screed has, after 28 days of the casting of the cellular cement composition, a compressive strength comprised between 1 and 2 MPa, measured by means of specific measuring means of the per se known type.

Such a second example of self-levelling screed has, after 28 days of the casting of the cellular cement composition, a compressive strength comprised between 10 and 16 MPa, being able to receive a paving, measured by means of specific measuring means of the per se known type.

It is reminded that, with particular reference to the second example of self-levelling screed, the cured cellular cement compositions, in comparison to the ordinary ones, have a mechanical strength after 28 days that is approximately the 60-80% of the final value of strength.

After 24/36 hours after the casting of the cement composition, according to the present invention, a walkable screed is obtained.

By means the use variably combined of the above said additives, together the described purposes, therefore, we were able to realize in a surprising way at least a self-levelling screed by means the use of a cellular cement composition containing argillite and flint, by preventing the known problems that these two elements normally cause in a screed or generally in a cured cement composition.

Furthermore, by being able to use the argillite incorporated inside the screed, for its elastic characteristic, made this latter resistant to the vibration and so of the anti-seismic type.

## Claims

1. Cellular cement composition applicable in the building field with the function of self-levelling screed, comprising a dry, or naturally wet, mixture constituted by at least a stone aggregate grinded mechanically with granules having maximum size of 25 mm, by at least a hydraulic binder, by possible polymeric inerts and comprising at least a water-reducing agent and mixing water, **wherein** said stone aggregate is constituted by sedimentary rock comprising the following component elements, which are present, with respect to the weight of the same stone aggregate, with values comprised in the following percentage in weight, for a maximum of 100% : calcarenite: 70,0 - 92,0 %, argillite: 3,5 - 8,0 %, calcite: 1,8 - 2,5 %, flint: 0,5 - 9,0 %, artificial conglomerate and opaque minerals: 0,9 - 1,5 %, furthermore, such a stone aggregate, with respect to the total volume thereof, having a portion comprised between 35 - 40 % in volume of granules with size smaller than 0,063 mm, said stone aggregate being in a quantity comprised between 325 and 1430 % in weight with respect to the weight of the hydraulic binder, said cellular cement composition comprising also in addition the following additives:
- At least an aerating foaming agent, constituted for example by at least a surfactant, adapted to generate air bubbles, and being added in a quantity comprised between 0,1 and 4,0 % in weight with respect to the weight of the dry, or naturally wet, mixture ;
- At least a gel forming agent, constituted by a molecular colloid substance adapted to gel when it is put in contact with water, in such a way to block the ascent of the air bubbles obtained with the aerating foaming agent, and to retain inside itself the particles of said stone aggregate having size smaller than 0,063 mm, so at least the clay and the flint, and being added in quantity comprised between 0,03 and 0,10 % in weight with respect to the weight of the dry, or naturally wet, mixture, particularly in a quantity comprised between 0,03 and 0,05 % with temperatures lower than 15°C during the casting of the cellular cement composition, in a quantity comprised between 0,05 and 0,07 % with temperatures comprised between 15°C and 25°C during the casting of the cellular cement composition, in a quantity comprised between 0,07 and 0,1 % with temperatures greater than 25°C during the casting of the cellular cement composition.

2. Cellular cement composition according to claim 1, **characterized in that** said polymeric inerts are of the heterogeneous type and are constituted by thermoplastic or thermosetting polymers, as for example PET, PE, PP, LDPE, HDPE, etc., and/or elastomeric materials, as for example rubber, etc., and are grinded in advance in particles having grains comprised between 2 and 20 mm, said polymeric inerts being in a quantity comprised between 0,00 and 5,00 % in weight, preferably 0,30 and 5,00 % in weight, with respect to the weight of the dry, or naturally wet, mixture.

3. Cellular cement composition according to claim 1, **characterized in that** said hydraulic binder is constituted by Portland or Pozzolanic cement 32,5 or 42,5 or by lime, and is in a quantity comprised between 3,8 and 25% in weight with respect to the weight of said dry, or naturally wet, mixture, preferably, if cement is selected, the quantity thereof is comprised between 3,8 and 22 % in weight with respect to the weight of said dry, or naturally wet, mixture, or if lime is selected, the quantity thereof is comprised between 5 and 25% in weight with respect to the weight of said dry, or naturally wet, mixture.

4. Cellular cement composition according to claim 1, **characterized in that** the water-reducing agent is constituted by a so-called super-fluidizer of the melamine or carboxylic type, and is added in a quantity comprised between 0,58 and 1,6% in weight with respect to the weight of the hydraulic binder.

5. Cellular cement composition according to claim 4, **characterized in that** it comprises in addition at least one of the following additives :
- Curing accelerating agent of the cement composition, acting as antifreeze for the cement composition at the fluid state thereof and for increasing the hardness of the cement composition at the cured state thereof, such an agent being constituted by powdered calcium formate, and being added in a quantity comprised between 0,02 and 0,50 % in weight with respect to the weight of said dry, or naturally wet, mixture ;
- Moisturizing agent, constituted by a liquid additive based on polymers of polyacrylic acid, free from chloride, adapted to hydrate all the hydraulic binder during the mixing of the cement composition, and being in a quantity comprised between almost 0,12 and 1% in weight with respect to the weight of the hydraulic binder in a directly proportional way.

6. Cellular cement composition according to claim 5, **characterized in that** said curing accelerating agent of the cement composition, for acting as antifreeze for the cement composition at the fluid state thereof and for increasing the hardness of the cement composition at the cured state thereof, is in a quantity comprised between 0,4 and 0,5 % in weight with respect to the weight of the said dry, or naturally wet, mixture, with temperatures lower than 5°C during the casting of the cellular cement composition, in a quantity comprised between 0,20 and 0,40 % % in weight with respect to the weight of the said dry, or naturally wet, mixture, with temperatures comprised between 5°C and 15°C during the casting of the cellular cement composition, in a quantity of 0,10 % % in weight with respect to the weight of the said dry, or naturally wet, mixture, with temperatures comprised between 15°C and 25°C during the casting of the cellular cement composition, and in a quantity comprised between 0,02 and 0,10 % % in weight with respect to the weight of the said dry, or naturally wet, mixture, with temperatures higher than 25°C during the casting of the cellular cement composition.

7. Cellular cement composition according to claim 5, **characterized to** comprise in addition at least one of the additional following additives:
- A first blowing agent, constituted by aluminium powder, adapted to allow to the cellular cement composition to expand during the first 24 hours from its casting, and being added in a quantity comprised between 0,02 and 0,05 % in weight with respect to the weight of said dry, or naturally wet, mixture ;
- Retarding agent, adapted to maintain the level of workability of the obtained cement composition with said water-reducing agent for a useful time for a maximum of 3 hours, and being added in a quantity comprised between 0,03 and 0,35 % in weigh with respect to the weight of said dry, or naturally wet, mixture, particularly in a quantity of 0,03 % with temperatures lower than 10°C during the casting of the cellular cement composition, in a quantity comprised between 0,03 and 0,1 % with temperatures comprised between 10°C and 25°C during the casting of the cellular cement composition, in a quantity comprised between 0,1 and 0,35% with temperatures higher than 25°C during the casting of the cellular cement composition ;
- Accelerating agent, constituted by a curing accelerating additive of the per se known type, different to the calcium formate, adapted to accelerate as much as possible the curing of the cement composition after its casting, and being added in a quantity comprised between 0,02 and 0,30 % in weight with respect to the weight of the dry, or naturally wet, mixture, particularly in a quantity of 0,30 % with temperatures lower than 5°C during the casting of the cellular cement composition, in a quantity of 0,20% with temperatures comprised between 5°C and 10°C during the casting of the cellular cement composition, in a quantity of 0,10 % with temperatures comprised between 10°C and 25°C during the casting of the cellular cement composition, in a quantity comprised between 0,02 and 0,10% with temperatures higher than 25°C during the casting of the cellular cement composition ;
- Anti-shrinkage agent, preferably of the liquid type, and adapted to control the hygrometric shrinkage of the casted cement composition, and being added in a quantity comprised between 0,12 and 1,2 % in weight with respect to the weight of the hydraulic binder, in inversely proportional way depending on the quantity of the same hydraulic binder ;
- A second blowing agent, constituted by a powdered blowing additive of the per se known type, different to the first blowing agent, as for example chalk, and adapted to, passed the first 24 hours from the casting of the cement composition, to allow that, during the curing thereof, particularly for the subsequent 36-48 hours, the same cement composition expands, and being added in a quantity comprised between almost 0,12 and 0,8 % in weight with respect to the weight of the hydraulic binder in a directly proportional way ;
- Antifoaming agent, constituted for example by mineral oils, silicone polymers, tributyl phosphate, glycols, etc., adapted to obstruct and to reduce up the foam not retained by the gel forming agent, and being added in a quantity comprised between 12,50 and 40,00 % in weight with respect to the weight of said water-reducing water ;
- Viscosity modifying agent, constituted by at least an additive of the per se known type, as for example synthetic oil, adapted to create a cement composition more cohesive and to reduce the phenomena of segregation and particularly the superficial bleeding, and being added in a quantity comprised between 0,08 and 5,88 % in weight with respect to the weight of the hydraulic binder, in a inversely proportional way with respect to this latter.

8. Cellular cement composition according to one of the preceding claims, **characterized in that** the volumetric mass density of said dry, or naturally wet, mixture is comprised between 1750 and 1950 Kg/m³.

9. Cellular cement composition according to one of the preceding claims, **characterized in that** the mixing water is added in a quantity comprised between the 8,5 and 25% in weight with respect to the weight of the dry, or naturally wet, mixture.

10. Cellular cement composition according to claim 9, **characterized in that** the volumetric mass density of the same cellular cement composition is comprised between 2150 and 2200 Kg/m³.

11. Cellular cement composition according to claim 1, **characterized in that** said stone aggregate is preferably constituted by the upper substrate of globigerina limestone formation layer, that may be quarried on the Isle of Malta.

12. Cellular cement composition according to one of the preceding claims, **characterized in that** a mixture of hydraulic binder plus stone aggregate plus possible polymeric inerts plus additives variably combined to each other, adapted to be mixed with mixing water, has a quantity of stone aggregate comprised between 600 and 1000 Kg for cubic metre of said mixture, preferably between 700 and 800 Kg/m³, a quantity of hydraulic binder comprised between 70 and 100 Kg for cubic metre of said mixture, whereas the polymeric inerts and the additives being added in the quantities previously indicated in weight, furthermore, the addition of the aerating foaming agent completing the filling of the available volume of said of said mixture hydraulic binder plus stone aggregate plus possible polymeric inerts plus additives.

13. Cellular cement composition according to one of the claim 1 - 11, **characterized in that** a mixture of hydraulic binder plus stone aggregate plus possible polymeric inerts plus additives variably combined to each other, adapted to be mixed with mixing water, has a quantity of stone aggregate comprised between 1300 and 1450 Kg for cubic metre of said mixture, a quantity of hydraulic binder comprised between 320 and 400 Kg for cubic metre of said mixture, whereas the polymeric inerts and the additives being added in quantities previously indicated in weight, furthermore, the addition of the aerating foaming agent completing the filling of the available volume of said mixture hydraulic binder plus stone aggregate plus possible polymeric inerts plus additives.

14. Method for obtaining a cellular cement composition according to one of the preceding claims comprising the followings steps :
- Mechanical quarrying of said stone aggregate ;
- Mechanical grinding of the quarried stone aggregate obtaining granules with size smaller than 25,00 m ;
- Inserting of the grinded stone aggregate inside a rotating mixing means for cement compositions, as for example a concrete mixer or an in-transit mixer, in the quantities indicated in the preceding claims, such a mixing means rotating at the maximum speed thereof, as for example at 15 rpm ;.
- Inserting, inside the rotating mixing means, of mixing water, in the quantities said above, preferably around 18% in weight with respect to the weight of said dry, or naturally wet, mixture, by obtaining a fluid cement composition ;
- Reduction at minimum the turns of the rotating mixing means, as for example at 1-2 rpm, and taking a sample of mixture so far obtained ;
- Submitting said taken sample to a concrete slump test, by using a hollow conical frustum, having a lower base of 100 mm, an upper base of 78 mm and an height of 58 mm, and verifying that the base diameter of the fluid cement composition caused by the sinking is within 220 mm and 250 mm, otherwise, further mixing water is added, remaining always in the percentage above indicated in the preceding claims ;
- Increasing at maximum speed of the turns of the rotating mixing means and addition of the additives variably combined to each other in the quantities according to preceding claims ;
- Eventual addition of the polymeric inerts, in the quantities according to the preceding claims ;
- A time that the additives are dissolved and the obtained cellular cement composition is amalgamated, after a normal technical time, which is known to the skilled person in the field, as for example for 15 minutes, the turns of the rotating mixing means are decreased to the minimum speed thereof, in a way to prevent the formation of argillite accumulations, that make the same cellular cement composition unusable ;
- Possible transportation of the fluid cellular cement composition so far obtained to the construction site wherein must be casted by means of the mixing means, as for example an in-transit mixer ;
- On the construction site where the fluid cellular cement composition far obtained must be casted, a further concrete slump test is carried out, for verifying that its values are within the workable ones of the starting cellular cement composition, that is, the diameter of the fluid cement composition after the shrinking is comprised within 220 mm - 250 mm, otherwise additional mixing water will add, remaining always in the percentage according to the previous claims.

15. Use of the fluid cellular cement composition, obtained according to the method of claim 14, for obtaining a self-levelling screed, by casting it by means of pumping means of the per se known type, where this laid down self-levelling and will cured over time.

16. Self-levelling screed obtained by means of the use according to claim 15, **characterized in that** it has a minimum thickness of 30 mm.

17. Self-levelling screed obtained by means of the use according to claim 15 from the cellular cement composition of claim 12, , **characterized in that** it has a volumetric mass density comprised between 600 and 700 Kg/m³ and a compression strength comprised between 1 and 2 MPa after 28 days from the casting of the cellular cement composition.

18. Self-levelling screed obtained by means of the use according to claim 15 from the cellular cement composition of claim 13, **characterized in that** it has a volumetric mass density comprised between 1800 and 2050 Kg/m³ and a compression strength comprised between 10 and 16 MPa after 28 days from the casting of the cellular cement composition.

## Patentansprüche

1. Zellige Zementzusammensetzung, anwendbar im Baubereich mit der Funktion eines selbstnivellierenden Estrichs, umfassend eine trockene oder natürlich feuchte Mischung, die aus mindestens einem mechanisch gemahlenen Gesteinsaggregat mit Körnern mit einer maximalen Größe von 25 mm, aus mindestens einem hydraulischen Bindemittel, aus eventuellen polymeren Inertstoffen besteht und mindestens ein wasserreduzierendes Mittel und Mischwasser enthält, wobei das Gesteinsaggregat aus Sedimentgestein besteht, das die folgenden Bestandteile enthält, die, bezogen auf das Gewicht des Gesteinsaggregats, mit Werten in den folgenden Gewichtsprozentanteilen für maximal 100% vorhanden sind: Calcarenit: 70,0 - 92,0%, Argillit: 3,5 - 8,0%, Calcit: 1,8 - 2,5%, Feuerstein: 0,5 - 9,0 %, künstliches Konglomerat und undurchsichtige Minerale: 0,9 - 1,5%, wobei ferner ein solches Gesteinsaggregat, bezogen auf sein Gesamtvolumen, einen Anteil von 35 - 40 Vol.-% an Körnern mit einer Größe von weniger als 0,063 mm aufweist, wobei das Gesteinsaggregat in einer Menge von 325 bis 1430 Gew.-%, bezogen auf das Gewicht des hydraulischen Bindemittels vorliegt, wobei die zelluläre Zementzusammensetzung ferner außerdem die folgenden Zusatzstoffe enthält: mindestens einen Schaumbildner, der beispielsweise aus mindestens einem oberflächenaktiven Stoff besteht, der geeignet ist, Luftblasen zu erzeugen, und der in einer Menge zwischen 0,1 und 4,0 Gew.-%, bezogen auf das Gewicht der trockenen oder natürlich feuchten Mischung, zugesetzt wird; mindestens einen Gelbildner, der aus einer molekularen kolloidalen Substanz besteht, die in der Lage ist, bei Kontakt mit Wasser zu gelieren, um das Aufsteigen der mit dem Schaumbildner erhaltenen Luftblasen zu blockieren und die Teilchen des Gesteins-aggregats mit einer Größe von weniger als 0,063 mm in sich zu halten, also zumindest den Ton und den Feuerstein, und das in einer Menge zwischen 0,03 und 0,10 Gew.-%, bezogen auf das Gewicht der trockenen oder natürlich feuchten Mischung, zugesetzt wird, insbesondere in einer Menge zwischen 0,03 bis 0,05 % bei Temperaturen von weniger als 15°C während des Gießens der zelligen Zementzusammensetzung, in einer Menge zwischen 0,05 und 0,07 % bei Temperaturen zwischen 15°C und 25°C während des Gießens der zelligen Zementzusammensetzung, in einer Menge zwischen 0,07 und 0,1 % bei Temperaturen über 25°C während des Gießens der zelligen Zementzusammensetzung.

2. Zellige Zementzusammensetzung nach Anspruch 1, **dadurch gekennzeichnet, dass** die polymeren Inertstoffe vom heterogenen Typ sind und aus thermoplastischen oder wärmehärtenden Polymeren, wie z.B. PET, PE, PP, LDPE, HDPE usw., und/oder elastomeren Materialien, wie z.B. Kautschuk usw., bestehen und im Voraus in Teilchen mit einer Körnung zwischen 2 und 20 mm gemahlen werden, wobei die polymeren Inertstoffe in einer Menge zwischen 0,00 und 5,00 Gew.-%, vorzugsweise 0,30 und 5,00 Gew.-%, in Bezug auf das Gewicht des trockenen oder natürlich feuchten Gemischs sind.

3. Zellige Zementzusammensetzung nach Anspruch 1, **dadurch gekennzeichnet, dass** das hydraulische Bindemittel aus Portland- oder Puzzolanzement 32,5 oder 42,5 oder aus Kalk besteht und in einer Menge zwischen 3,8 und 25 Gew.-%, bezogen auf das Gewicht der trockenen natürlich feuchten Mischung vorliegt, wenn Zement gewählt wird, in seiner Menge zwischen 3,8 und 22 Gew.-%, bezogen auf das Gewicht der trockenen oder natürlich feuchten Mischung, wenn Kalk gewählt wird, dessen Menge zwischen 5 und 25 Gew.-%, bezogen auf das Gewicht der trockenen oder natürlich feuchten Mischung vorliegt.

4. Zellige Zementzusammensetzung nach Anspruch 1, **dadurch gekennzeichnet, dass** das wasserreduzierende Mittel aus einem sogenannten Superfluidisator vom Melamin- oder Carbonsäuretyp besteht und in einer Menge zwischen 0,58 und 1,6 Gew.-%, bezogen auf das Gewicht des hydraulischen Bindemittels, zugesetzt wird.

5. Zellige Zementzusammensetzung nach Anspruch 4, **dadurch gekennzeichnet, dass** sie zusätzlich mindestens einen der folgenden Zusatzstoffe enthält: Mittel zur Beschleunigung der Aushärtung der Zementzusammensetzung, das als Frostschutzmittel für die Zementzusammensetzung im flüssigen Zustand und zur Erhöhung der Härte der Zementzusammensetzung im ausgehärteten Zustand, wobei dieses Mittel aus pulverisiertem Calciumformiat besteht und in einer Menge zwischen 0,02 und 0,50 Gew.-%, bezogen auf das Gewicht der trockenen oder natürlich feuchten Mischung zugesetzt wird; Befeuchtungsmittel, das aus einem flüssigen Zusatzstoff auf der Basis von chloridfreien Polyacrylsäurepolymeren besteht, das geeignet ist, das gesamte hydraulische Bindemittel während des Mischens der Zementzusammensetzung zu hydratisieren, und das in einer Menge zwischen etwa 0,12 und 1 Gew.-%, bezogen auf das Gewicht des hydraulischen Bindemittels, direkt proportional zu diesem ist.

6. Zellige Zementzusammensetzung nach Anspruch 5, dadurch gekenn-zeichnet, dass der Aushärtungsbeschleuniger der Zementzusammen-setzung, der als Frostschutzmittel für die Zementzusammensetzung in ihrem flüssigen Zustand wirkt und die Härte der Zementzusammensetzung in ihrem ausgehärteten Zustand erhöht, in einer Menge zwischen 0,4 und 0,5 Gew.-%, bezogen auf das Gewicht der trockenen oder natürlich feuchten Mischung, bei Temperaturen unter 5°C während des Gießens der zelligen Zementzusammensetzung, in einer in einer Menge zwischen 0,20 und 0,40 Gew.-%, bezogen auf das Gewicht der trockenen oder natürlich feuchten Mischung, bei Temperaturen zwischen 5°C und 15°C während des Gießens der zelligen Zementzusammensetzung, in einer Menge von 0,10 Gew.-%, bezogen auf das Gewicht der trockenen oder natürlich feuchten Mischung, bei Temperaturen zwischen 15°C und 25°C während des Gießens der zelligen Zementzusammensetzung, und in einer Menge zwischen 0,02 und 0,10 Gew.-%, bezogen auf das Gewicht der trockenen oder natürlich feuchten Mischung, bei Temperaturen von über 25°C während des Gießens der zelligen Zementzusammensetzung vorliegt.

7. Zellige Zementzusammensetzung nach Anspruch 5, **dadurch gekennzeichnet, dass** sie zusätzlich mindestens einen der folgenden Zusatzstoffe enthält:
ein erstes Treibmittel, das aus Aluminiumpulver besteht und dazu geeignet ist, die zellige Zementzusammensetzung während der ersten 24 Stunden nach ihrem Gießen zu expandieren, und das in einer Menge zwischen 0,02 und 0,05 Gew.-%, bezogen auf das Gewicht der trockenen oder natürlich feuchten Mischung, zugesetzt wird;
Verzögerungsmittel, das geeignet ist, den Grad der Verarbeitbarkeit der erhaltenen Zementzusammensetzung mit dem wasserreduzierenden Mittel für eine Nutzzeit von maximal 3 Stunden aufrechtzuerhalten, und das in einer Menge zwischen 0,03 und 0,35 Gew.-%, bezogen auf das Gewicht der trockenen oder natürlich feuchten Mischung, hinzugefügt wird, insbesondere in einer Menge von 0,03 % bei Temperaturen unter 10°C während des Gießens der zellenförmigen Zementzusammensetzung, in einer Menge zwischen 0,03 und 0,1 % bei Temperaturen zwischen 10°C und 25°C während des Gießens der zelligen Zementzusammensetzung, in einer Menge zwischen 0,1 und 0,35% bei Temperaturen über 25°C während des Gießens der zelligen Zementzusammensetzung;
Beschleunigungsmittel, das aus einem an sich bekannten, vom Calciumformiat verschiedenen, die Aushärtung beschleunigenden Zusatz-stoff besteht, der geeignet ist, die Aushärtung der Zementzusammen-setzung nach ihrem Gießen so weit wie möglich zu beschleunigen, und in einer Menge zwischen 0,02 und 0,30 Gew.-%, bezogen auf das Gewicht der trockenen oder natürlich feuchten Mischung hinzugefügt wird, insbesondere in einer Menge von 0,30 % bei Temperaturen unter 5°C während des Gießens der zelligen Zementzusammensetzung, in einer Menge von 0,20 % bei Temperaturen zwischen 5°C und 10°C während des Gießens der zelligen Zementzusammensetzung, in einer Menge von 0,10% bei Temperaturen zwischen 10°C und 25°C während des Gießens der zelligen Zementzusammensetzung, in einer Menge zwischen 0,02 und 0,10 % bei Temperaturen über 25°C während des Gießens der zelligen Zementzusammensetzung;
Antischrumpfmittel, vorzugsweise vom flüssigen Typ, das geeignet ist, die hygrometrische Schrumpfung der gegossenen Zementzusammensetzung zu kontrollieren, und das in einer Menge zwischen 0,12 und 1,2 Gewichtsprozent, bezogen auf das Gewicht des hydraulischen Bindemittels zugesetzt wird, in umgekehrt proportional zur Menge des gleichen hydraulischen Bindemittels;
ein zweites Treibmittel, das aus einem pulverförmigen Treibmittelzusatz des an sich bekannten Typs besteht, der sich von dem ersten Treibmittel unterscheidet, wie zum Beispiel Kreide, und das dazu geeignet ist, nach den ersten 24 Stunden nach dem Gießen der Zementzusammensetzung zu ermöglichen, dass während des Aushärtens die Zementzusammen-setzung, insbesondere in den darauffolgenden 36-48 Stunden, sich ausdehnt und das in einer Menge zwischen etwa 0,12 und 0,8 Gew.-%, bezogen auf das Gewicht des hydraulischen Bindemittels, direkt proportional zugesetzt wird;
Entschäumer, der zum Beispiel aus Mineralölen, Silikonpolymeren, Tributylphosphat, Glykolen usw. besteht, der geeignet ist, den vom Gelbildner nicht zurückgehaltenen Schaum zu reduzieren, und in einer Menge zwischen 12,50 und 40,00 Gew.-%, bezogen auf das Gewicht des wasserreduzierenden Wassers, zugesetzt wird;
Viskositätsmodifizierungsmittel, das aus mindestens einem an sich bekannten Zusatzstoff, wie z.B. einem synthetischen Öl, besteht und dazu geeignet ist, eine kohäsivere Zementzusammensetzung zu schaffen und die Entmischungserscheinungen und insbesondere das oberflächliche Ausbluten zu verringern, und das in einer Menge zwischen 0,08 und 5,88 Gew.-%, bezogen auf das Gewicht des hydraulischen Bindemittels zugesetzt wird, und zwar umgekehrt proportional zu diesem letzteren.

8. Zellige Zementzusammensetzung nach einem der vorhergehenden Ansprüche, **dadurch gekennzeichnet, dass** die volumetrische Massendichte der trockenen oder natürlich feuchten Mischung zwischen 1750 und 1950 kg/m³ liegt.

9. Zellige Zementzusammensetzung nach einem der vorangehenden Ansprüche, **dadurch gekennzeichnet, dass** das Mischwasser in einer Menge zwischen 8,5 und 25 Gew.-%, bezogen auf das Gewicht der trockenen oder natürlich feuchten Mischung zugesetzt wird.

10. Zellige Zementzusammensetzung nach Anspruch 9, **dadurch gekennzeichnet, dass** die volumetrische Massendichte der zelligen Zementzusammensetzung zwischen 2150 und 2200 kg/m³ liegt.

11. Zellige Zementzusammensetzung nach Anspruch 1, **dadurch gekennzeichnet, dass** das Gesteinsaggregat vorzugsweise aus dem oberen Substrat der Globigerina-Kalksteinschicht besteht, die auf der Insel Malta abgebaut werden kann.

12. Zellige Zementzusammensetzung nach einem der vorhergehenden Ansprüche, **dadurch gekennzeichnet dass** eine Mischung aus hydraulischem Bindemittel plus Gesteinsaggregat plus eventuellen polymeren Inertstoffen plus Additiven, die variabel miteinander kombiniert sind und mit Anmachwasser gemischt werden können, eine Menge an Gesteinsaggregat zwischen 600 und 1000 kg pro Kubikmeter der Mischung, vorzugsweise zwischen 700 und 800 kg/m³, und eine Menge an hydraulischem Bindemittel zwischen 70 und 100 kg pro Kubikmeter der Mischung aufweist, während die polymeren Inertstoffe und die Additive in den Mengen die Zusatzstoffe in den zuvor angegebenen Gewichtsmengen zugesetzt werden, wobei die Zugabe des Schaumbildners die Füllung des verfügbaren Volumens des Gemischs aus hydraulischem Bindemittel plus Gesteinsaggregat plus eventuellen polymeren Inertstoffen plus Zusatzstoffen vervollständigt.

13. Zellige Zementzusammensetzung nach einem der Ansprüche 1 bis 11, **dadurch gekennzeichnet, dass** eine Mischung aus hydraulischem Bindemittel plus Gesteinsaggregat plus eventuellen polymeren Inertstoffen plus Zusatzstoffen, die variabel miteinander kombiniert sind und mit Anmachwasser gemischt werden können, eine Menge an Gesteinsaggregat zwischen 1300 und 1450 kg pro Kubikmeter der Mischung und eine Menge an hydraulischem Bindemittel zwischen 320 und 400 kg pro Kubikmeter der Mischung aufweist, wobei die polymeren Inertstoffe und die Zusatzstoffe in den zuvor in Gewicht angegebenen Mengen zugegeben werden, wobei außerdem die Zugabe des belüftenden Schaummittels die Füllung des verfügbaren Volumens der Mischung aus hydraulischem Bindemittel plus Gesteinsaggregat plus eventuelle polymere Inertstoffe plus Zusatzstoffe vervollständigt.

14. Verfahren zur Herstellung einer zelligen Zementzusammensetzung nach einem der vorhergehenden Ansprüche, das die folgenden Schritte umfasst:
Mechanische Gewinnung des Gesteinskörpers;
Mechanische Zerkleinerung des abgebauten Gesteinskörpers, um ein Granulat mit einer Größe von weniger als 25,00 mm zu erhalten;
Einbringen der gemahlenen Gesteinskörnung in eine rotierende Mischvorrichtung für Zementzusammensetzungen, wie z.B. einen Betonmischer oder einen Transportmischer, in den in den vorhergehenden Ansprüchen angegebenen Mengen, wobei eine solche Mischvorrichtung mit ihrer maximalen Geschwindigkeit, wie z.B. 15 U/min, rotiert;
Einbringen von Mischwasser in das Innere der rotierenden Mischeinrichtung in den oben genannten Mengen, vorzugsweise etwa 18 Gew.-%, bezogen auf das Gewicht der trockenen oder natürlich feuchten Mischung, um eine flüssige Zementzusammensetzung zu erhalten;
Verringern der Umdrehungen des rotierenden Mischers auf ein Minimum, z.B. auf 1-2 Umdrehungen pro Minute, und Entnahme einer Probe der so erhaltenen Mischung;
Unterziehen der entnommenen Probe einem Betonsinkversuch unter Verwendung eines hohlen Kegelstumpfes mit einer unteren Basis von 100 mm, einer oberen Basis von 78 mm und einer Höhe von 58 mm und Überprüfen, dass der durch das Sinken verursachte Basisdurchmesser der flüssigen Zementzusammensetzung zwischen 220 mm und 250 mm liegt, andernfalls wird weiteres Mischwasser zugegeben, wobei stets der in den vorhergehenden Ansprüchen angegebene Prozentsatz beibehalten wird;
Erhöhen der Drehzahl des rotierenden Mischers auf maximale Geschwindigkeit und Zugabe der Additive in variabler Kombination in den Mengen gemäß den vorhergehenden Ansprüchen; eventuell Zugabe der polymeren Inertstoffe in den Mengen gemäß den vorhergehenden Ansprüchen;
Nachdem die Zusatzstoffe aufgelöst sind und die erhaltene zellige Zementzusammensetzung amalgamiert ist, werden nach einer normalen technischen Zeit, die dem Fachmann auf dem Gebiet bekannt ist, wie z.B. fünfzehn Minuten, die Umdrehungen der rotierenden Mischeinrichtung auf ihre minimale Geschwindigkeit reduziert, um die Bildung von Argillitansammlungen zu verhindern, die die zellige Zementzusammen-setzung unbrauchbar machen;
möglicher Transport der so erhaltenen flüssigen zelligen Zementzusammensetzung zur Baustelle, wo sie mit Hilfe der Mischeinrichtung, wie z.B. einem Durchlaufmischer, gegossen werden muss;
auf der Baustelle, auf der die so erhaltene flüssige Zement-zusammensetzung gegossen werden muss, wird ein weiterer Beton-Setztest durchgeführt, um zu überprüfen, dass seine Werte innerhalb der verarbeitbaren Werte der Ausgangs-Zementzusammensetzung liegen, d.h. dass der Durchmesser der flüssigen Zementzusammensetzung nach dem Schrumpfen innerhalb von 220 mm - 250 mm liegt, andernfalls wird zusätzliches Mischwasser hinzugefügt, das immer in dem Prozentsatz gemäß den vorhergehenden Ansprüchen bleibt.

15. Verwendung der nach dem Verfahren des Anspruchs 14 erhaltenen flüssigen, zelligen Zementzusammensetzung zur Herstellung eines selbstnivellierenden Estrichs durch Gießen mittels Pumpmitteln der an sich bekannten Art, wobei dieser selbstnivellierend verlegt wird und mit der Zeit aushärtet.

16. Selbstnivellierender Estrich, erhalten durch die Verwendung nach Anspruch 15, **dadurch gekennzeichnet ist, dass** er eine Mindestdicke von 30 mm aufweist.

17. Selbstnivellierender Estrich, der durch die Verwendung nach Anspruch 15 aus der zelligen Zementzusammensetzung nach Anspruch 12 erhalten wird, **dadurch gekennzeichnet, dass** er eine volumetrische Massendichte zwischen 600 und 700 kg/m³ und eine Druckfestigkeit zwischen 1 und 2 MPa nach 28 Tagen nach dem Gießen der zellulären Zementzusammen-setzung aufweist.

18. Selbstnivellierender Estrich, der durch die Verwendung nach Anspruch 15 aus der zelligen Zementzusammensetzung nach Anspruch 13 erhalten wird, **dadurch gekennzeichnet ist, dass** er eine volumetrische Massendichte zwischen 1800 und 2050 kg/m³ und eine Druckfestigkeit zwischen 10 und 16 MPa nach 28 Tagen nach dem Gießen der zellulären Zementzusammensetzung aufweist.

## Revendications

1. Composition de ciment cellulaire applicable dans le domaine du bâtiment avec la fonction de chape autonivelante, comprenant un mélange sec, ou naturellement humide, constitué d'au moins un agrégat de pierre broyé mécaniquement avec des granules ayant une taille maximale de 25 mm, d'au moins un liant hydraulique, d'éventuels inertes polymères et comprenant au moins un plastifiant-réducteur d'eau et de l'eau de gâchage, **dans laquelle** ledit agrégat de pierre est constitué d'une roche sédimentaire comprenant les éléments constitutifs suivants, qui sont présents, par rapport au poids du même agrégat de pierre, avec des valeurs comprises dans le pourcentage en poids suivant, pour un maximum de 100 % : calcarénite : 70,0 - 92,0%, argillite : 3,5 - 8,0%, calcite : 1,8 - 2,5 %, silex: 0,5 - 9,0 %, conglomérat artificiel et minéraux opaques : 0,9 - 1,5 %, en outre, un tel agrégat de pierre, par rapport au volume total de celui-ci, ayant une partie comprise entre 35 - 40 % en volume de granules avec une taille inférieure à 0,063 mm, ledit agrégat de pierre étant dans une quantité comprise entre 325 et 1 430 % en poids par rapport au poids du liant hydraulique, ladite composition de ciment cellulaire comprenant également en plus les additifs suivants :
- Au moins un agent moussant aérateur, constitué par exemple par au moins un tensioactif, apte à générer des bulles d'air, et étant ajouté en une quantité comprise entre 0,1 et 4,0 % en poids par rapport au poids du mélange sec, ou naturellement humide ;
- Au moins un agent gélifiant, constitué par une substance colloïdale moléculaire apte à se gélifier lorsqu'elle est mise en contact avec de l'eau, de manière à bloquer la montée des bulles d'air obtenues avec l'agent moussant aérateur, et à retenir en son sein les particules dudit agrégat de pierre ayant une taille inférieure à 0,063 mm, donc au moins l'argile et le silex, et étant ajouté en quantité comprise entre 0,03 et 0,10 % en poids par rapport au poids du mélange sec, ou naturellement humide, notamment en une quantité comprise entre 0,03 et 0,05 % à des températures inférieures à 15 °C pendant le coulage de la composition de ciment cellulaire, en une quantité comprise entre 0,05 et 0,07 % à des températures comprises entre 15 °C et 25 °C pendant le coulage de la composition de ciment cellulaire, en une quantité comprise entre 0,07 et 0,1 % à des températures supérieures à 25 °C pendant le coulage de la composition de ciment cellulaire.

2. Composition de ciment cellulaire selon la revendication 1, **caractérisée en ce que** lesdits inertes polymères sont du type hétérogène et sont constitués de polymères thermoplastiques ou thermodurcissables, comme par exemple PET, PE, PP, LDPE, HDPE, etc., et/ou de matériaux élastomères, comme par exemple le caoutchouc, etc., et sont broyés à l'avance en particules ayant des grains compris entre 2 et 20 mm, lesdits inertes polymères étant en une quantité comprise entre 0,00 et 5,00 % en poids, de préférence entre 0,30 et 5,00 % en poids, par rapport au poids du mélange sec, ou naturellement humide.

3. Composition de ciment cellulaire selon la revendication 1, **caractérisée en ce que** ledit liant hydraulique est constitué par du ciment Portland ou de pouzzolane 32,5 ou 42,5 ou par de la chaux, et est en une quantité comprise entre 3,8 et 25 % en poids par rapport au poids dudit mélange sec, ou naturellement humide, de préférence, si le ciment est choisi, sa quantité est comprise entre 3,8 et 22 % en poids par rapport au poids dudit mélange sec ou naturellement humide, ou si la chaux est choisie, sa quantité est comprise entre 5 et 25 % en poids par rapport au poids dudit mélange sec ou naturellement humide.

4. Composition de ciment cellulaire selon la revendication 1, **caractérisée en ce que** l'agent réducteur d'eau est constitué par un agent dit super-fluidisant de type mélamine ou carboxylique, et est ajouté en une quantité comprise entre 0,58 et 1,6 % en poids par rapport au poids du liant hydraulique.

5. Composition de ciment cellulaire selon la revendication 4, **caractérisée en ce qu**'elle comprend en outre au moins un des additifs suivants :
- Un agent accélérateur de durcissement de la composition de ciment, agissant comme antigel pour la composition de ciment à l'état fluide de celle-ci et pour augmenter la dureté de la composition de ciment à l'état durci de celle-ci, un tel agent étant constitué par du formiate de calcium en poudre, et étant ajouté en une quantité comprise entre 0,02 et 0,50 % en poids par rapport au poids dudit mélange sec, ou naturellement humide ;
- Un agent hydratant, constitué par un additif liquide à base de polymères d'acide polyacrylique, exempt de chlorure, adapté pour hydrater tout le liant hydraulique pendant le mélange de la composition de ciment, et étant dans une quantité comprise entre presque 0,12 et 1 % en poids par rapport au poids du liant hydraulique d'une manière directement proportionnelle.

6. Composition de ciment cellulaire selon la revendication 5, **caractérisée en ce que** ledit agent accélérateur de durcissement de la composition de ciment, pour agir comme antigel pour la composition de ciment à l'état fluide de celle-ci et pour augmenter la dureté de la composition de ciment à l'état durci de celle-ci, est en une quantité comprise entre 0,4 et 0,5 % en poids par rapport au poids dudit mélange sec, ou naturellement humide, avec des températures inférieures à 5 °C pendant le coulage de la composition de ciment cellulaire, en une quantité comprise entre 0,20 et 0,40 % en poids par rapport au poids dudit mélange sec, ou naturellement humide, à des températures comprises entre 5 °C et 15 °C pendant le coulage de la composition de ciment cellulaire, en une quantité de 0,10 % en poids par rapport au poids dudit mélange sec, ou naturellement humide, à des températures comprises entre 15 °C et 25 °C pendant le coulage de la composition de ciment cellulaire, et en une quantité comprise entre 0,02 et 0,10 % en poids par rapport au poids dudit mélange sec, ou naturellement humide, à des températures supérieures à 25 °C pendant le coulage de la composition de ciment cellulaire.

7. Composition de ciment cellulaire selon la revendication 5, **caractérisée en ce qu'elle** comprend en outre au moins un des additifs supplémentaires suivants :
- Un premier agent gonflant, constitué de poudre d'aluminium, adapté pour permettre à la composition de ciment cellulaire de se dilater pendant les premières 24 heures de son coulage, et étant ajouté en une quantité comprise entre 0,02 et 0,05 % en poids par rapport au poids dudit mélange sec, ou naturellement humide ;
- Un agent retardateur, adapté pour maintenir le niveau d'ouvrabilité de la composition de ciment obtenue avec ledit agent réducteur d'eau pendant un temps utile d'un maximum de 3 heures, et étant ajouté en une quantité comprise entre 0,03 et 0,35 % en poids par rapport au poids dudit mélange sec, ou naturellement humide, en particulier en une quantité de 0,03 % à des températures inférieures à 10 °C pendant le coulage de la composition de ciment cellulaire, en une quantité comprise entre 0,03 et 0,1 % à des températures comprises entre 10 °C et 25 °C pendant le coulage de la composition de ciment cellulaire, en une quantité comprise entre 0,1 et 0,35 % à des températures supérieures à 25 °C pendant le coulage de la composition de ciment cellulaire ;
- Un agent accélérateur, constitué par un additif accélérateur de durcissement du type connu en soi, différent du formiate de calcium, adapté pour accélérer autant que possible le durcissement de la composition de ciment après son coulage, et étant ajouté en une quantité comprise entre 0,02 et 0,30 % en poids par rapport au poids du mélange sec, ou naturellement humide, en particulier en une quantité de 0,30 % avec des températures inférieures à 5 °C pendant le coulage de la composition de ciment cellulaire, en une quantité de 0,20 % avec des températures comprises entre 5 °C et 10 °C pendant le coulage de la composition de ciment cellulaire, en une quantité de 0,10 % avec des températures comprises entre 10 °C et 25 °C pendant le coulage de la composition de ciment cellulaire, en une quantité comprise entre 0,02 et 0,10 % avec des températures supérieures à 25 °C pendant le coulage de la composition de ciment cellulaire ;
- Un agent anti-retrait, de préférence de type liquide, et adapté pour contrôler le retrait hygrométrique de la composition de ciment coulé, et étant ajouté en une quantité comprise entre 0,12 et 1,2 % en poids par rapport au poids du liant hydraulique, de manière inversement proportionnelle en fonction de la quantité du même liant hydraulique ;
- Un second agent gonflant, constitué d'un additif gonflant en poudre du type connu en soi, différent du premier agent gonflant, comme par exemple la craie, et adapté pour, passé les premières 24 heures du coulage de la composition de ciment, permettre que, pendant le durcissement de celle-ci, en particulier pendant les 36-48 heures suivantes, cette composition de ciment se dilate, et étant ajouté en une quantité comprise entre environ 0,12 et 0,8 % en poids par rapport au poids du liant hydraulique de manière directement proportionnelle ;
- Un agent antimousse, constitué par exemple d'huiles minérales, de polymères de silicone, de phosphate de tributyle, de glycols, etc., adapté pour obstruer et réduire la mousse non retenue par l'agent gélifiant, et étant ajouté en une quantité comprise entre 12,50 et 40,00 % en poids par rapport au poids dudit plastifiant-réducteur d'eau ;
- Un agent modificateur de viscosité, constitué par au moins un additif du type connu en soi, comme par exemple une huile synthétique, apte à rendre une composition de ciment plus cohésive et à réduire les phénomènes de ségrégation et particulièrement le ressuage superficiel, et étant ajouté en une quantité comprise entre 0,08 et 5,88 % en poids par rapport au poids du liant hydraulique, de façon inversement proportionnelle par rapport à ce dernier.

8. Composition de ciment cellulaire selon l'une des revendications précédentes, **caractérisée en ce que** la densité de masse volumétrique dudit mélange sec, ou naturellement humide, est comprise entre 1 750 et 1 950 kg/m³.

9. Composition de ciment cellulaire selon l'une des revendications précédentes, **caractérisée en ce que** l'eau de gâchage est ajoutée en une quantité comprise entre 8,5 et 25 % en poids par rapport au poids du mélange sec, ou naturellement humide.

10. Composition de ciment cellulaire selon la revendication 9, **caractérisée en ce que** la densité de masse volumétrique de cette composition de ciment cellulaire est comprise entre 2 150 et 2 200 kg/m³.

11. Composition de ciment cellulaire selon la revendication 1, **caractérisée en ce que** ledit agrégat de pierre est de préférence constitué par le substrat supérieur de la couche de formation de calcaire globigérine, qui peut être extrait de l'île de Malte.

12. Composition de ciment cellulaire selon l'une des revendications précédentes, **caractérisée en ce qu**'un mélange de liant hydraulique plus agrégat de pierre plus d'éventuels inertes polymères plus des additifs combinés de manière variable les uns aux autres, adapté pour être mélangé avec de l'eau de gâchage, a une quantité d'agrégat de pierre comprise entre 600 et 1 000 kg par mètre cube dudit mélange, de préférence entre 700 et 800 kg/m³, une quantité de liant hydraulique comprise entre 70 et 100 kg par mètre cube dudit mélange, les inertes polymériques et les additifs étant ajoutés dans les quantités précédemment indiquées en poids, en outre, l'addition de l'agent moussant aérateur complétant le remplissage du volume disponible dudit mélange liant hydraulique plus granulat de pierre plus éventuels inertes polymériques plus additifs.

13. Composition de ciment cellulaire selon l'une des revendications 1 à 11, **caractérisée en ce qu**'un mélange de liant hydraulique plus agrégat de pierre plus d'éventuels inertes polymères plus des additifs combinés de manière variable les uns aux autres, adapté pour être mélangé avec de l'eau de gâchage, a une quantité d'agrégat de pierre comprise entre 1 300 et 1 450 kg par mètre cube dudit mélange, une quantité de liant hydraulique comprise entre 320 et 400 kg par mètre cube dudit mélange, tandis que les inertes polymériques et les additifs sont ajoutés en quantités précédemment indiquées en poids, en outre, l'addition de l'agent moussant aérateur complète le remplissage du volume disponible dudit mélange liant hydraulique plus agrégat de pierre plus éventuels inertes polymériques plus additifs.

14. Procédé d'obtention d'une composition de ciment cellulaire selon l'une des revendications précédentes comprenant les étapes suivantes :
- Extraction mécanique dudit agrégat de pierre ;
- Broyage mécanique de l'agrégat de pierre de carrière pour obtenir des granules de taille inférieure à 25,00 m ;
- Insertion de l'agrégat de pierre broyé à l'intérieur d'un moyen de mélange rotatif pour des compositions de ciment, comme par exemple une bétonnière ou un mélangeur de transit, dans les quantités indiquées dans les revendications précédentes, un tel moyen de mélange tournant à sa vitesse maximale, comme par exemple à 15 tr/min ;
- Insertion, à l'intérieur du moyen de mélange rotatif, d'eau de gâchage, dans les quantités indiquées ci-dessus, de préférence autour de 18 % en poids par rapport au poids dudit mélange sec, ou naturellement humide, en obtenant une composition de ciment fluide ;
- Réduction au minimum des tours du moyen de mélange rotatif, comme par exemple à 1-2 tr/min, et prélèvement d'un échantillon du mélange ainsi obtenu ;
- Soumission dudit échantillon prélevé à un essai d'affaissement de béton, en utilisant un tronc de cône creux, ayant une base inférieure de 100 mm, une base supérieure de 78 mm et une hauteur de 58 mm, et vérification du fait que le diamètre de base de la composition de ciment fluide provoqué par l'affaissement est compris entre 220 mm et 250 mm, sinon, ajout d'eau de gâchage supplémentaire, en restant toujours dans le pourcentage indiqué ci-dessus dans les revendications précédentes ;
- Augmentation à la vitesse maximale des tours du moyen de mélange rotatif et ajout des additifs combinés de façon variable les uns aux autres dans les quantités selon les revendications précédentes ;
- Ajout éventuel des inertes polymères, dans les quantités selon les revendications précédentes ;
- Une fois que les additifs sont dissous et que la composition de ciment cellulaire obtenue est amalgamée, après un temps technique normal, qui est connu de l'homme du métier, comme par exemple pendant 15 minutes, les tours du moyen de mélange rotatif sont réduits à leur vitesse minimale, de manière à empêcher la formation d'accumulations d'argilites, qui rendent cette composition de ciment cellulaire inutilisable ;
- Transport possible de la composition de ciment cellulaire fluide obtenue jusqu'à présent vers le site de construction, où elle doit être coulée à l'aide du moyen de mélange, comme par exemple un mélangeur de transit ;
- Sur le chantier où la composition de ciment cellulaire fluide ainsi obtenue doit être coulée, on effectue un autre essai d'affaissement de béton, pour vérifier que ses valeurs se situent dans les limites d'ouvrabilité de la composition de ciment cellulaire de départ, c'est-à-dire que le diamètre de la composition de ciment fluide après le retrait est compris entre 220 mm et 250 mm, sinon on ajoute de l'eau de gâchage supplémentaire, en restant toujours dans le pourcentage selon les revendications précédentes.

15. Utilisation de la composition de ciment cellulaire fluide, obtenue selon le procédé de la revendication 14, pour l'obtention d'une chape autonivelante, en la coulant au moyen de moyens de pompage du type connu en soi, où cette chape est autonivelante et durcira dans le temps.

16. Chape autonivelante obtenue au moyen de l'utilisation selon la revendication 15, **caractérisée en ce qu**'elle présente une épaisseur minimale de 30 mm.

17. Chape autonivelante obtenue au moyen de l'utilisation selon la revendication 15 à partir de la composition de ciment cellulaire de la revendication 12, **caractérisée en ce qu**'elle présente une densité de masse volumétrique comprise entre 600 et 700 kg/m³ et une résistance à la compression comprise entre 1 et 2 MPa après 28 jours à partir du coulage de la composition de ciment cellulaire.

18. Chape autonivelante obtenue au moyen de l'utilisation selon la revendication 15 à partir de la composition de ciment cellulaire de la revendication 13, **caractérisée en ce qu**'elle présente une densité de masse volumétrique comprise entre 1 800 et 2 050 kg/m³ et une résistance à la compression comprise entre 10 et 16 MPa après 28 jours à partir de la coulée de la composition de ciment cellulaire.
